# EUROPEAN PATENT APPLICATION

(11) **EP 2 014 541 A1**
(43) Date of publication of application: **14.01.2009**
(21) Application number: 07380204.3
(22) Date of filing: 09.07.2007
(51) Int. Cl.: B62D 39/00

(54) **Security system against head-on collision, elevating the vehicle cockpit**

(71) Applicant: Atienzar Denia, Jose Enrique, 02003 Albacete (ES)
(72) Inventor: Atienzar Denia, Jose Enrique, 02003 Albacete (ES)

(57) **Abstract**

Security system against head-on collision elevating the vehicle, based on a joint of 2 resistant pieces with inclination. A united piece properly to the frontal part of the vehicle and another properly together with the cockpit of the driver, these bars are in a position inclined with respect to the ground and parallel bars to the lateral part of the vehicle, as they shown in figure 1. In case of head-on collision there will be a displacement between both bars of each set, moving therefore the cockpit over the frontal part of the vehicle. In case of head-on collision the piece located in the most frontal part would remain fixes, moving the second piece on the mentioned one, and along with it the cockpit of the driver. Depending on the angles (α and β) of the bars a greater or smaller displacement of the vehicle will be obtained. In case the angle "β" is greater than the angle "α" will be able to be obtained that the vehicle in case of a very abrupt impact tries to incline itself towards the right as it shows arrow 4, in this way in case of a very abrupt collision between two vehicles, it would not send the cockpit of the driver to the one of the other vehicle.

## Description

Approximately 50% of the accidents in vehicles are by head-on collision. During the frontal impacts of the vehicles the front part of the vehicle is become deformed squashing itself and today the tendency is that this crushing influences as little as possible in the cockpit of the driver. One tries that the energy of the collision should be absorbed by the deformation of the front part of the vehicle moving the cockpit some centimeters towards ahead so that the braking is not for example from 100 km/h to 0 abruptly. Also some systems have been made to avoid that the motor among during the impact in the cockpit, displacing it towards the lower part of the vehicle.

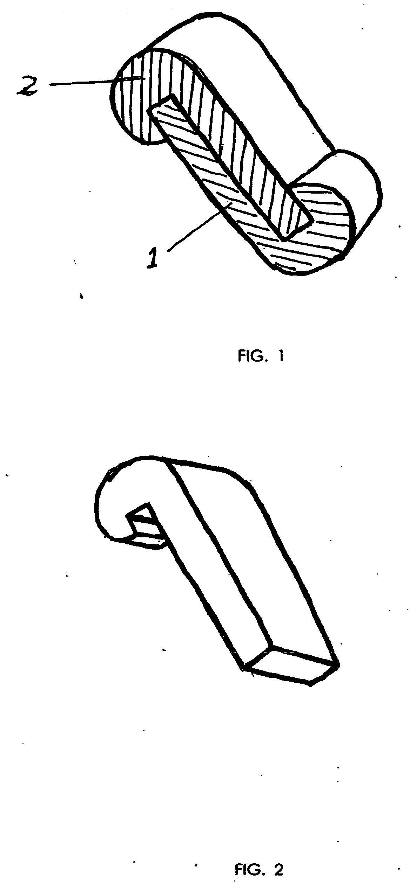

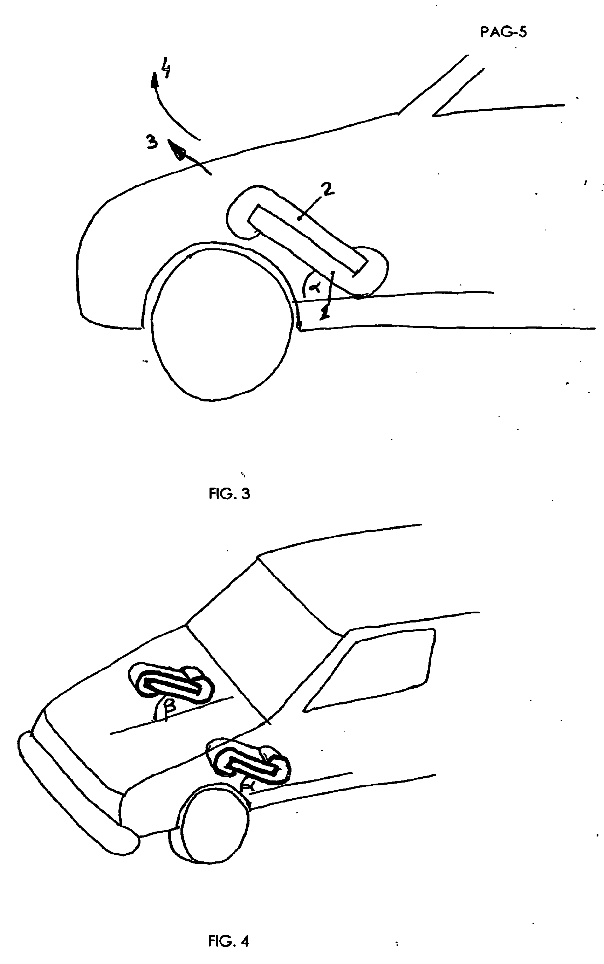

The present invention tries to superior move the car towards the front part and in an inclined direction as it shows figure 3 (arrow 3) or like the represented one in figure 3 (arrow 4). With this security system the following advantages are obtained. The cockpit gets about itself some centimeters during the collision avoiding to stop so abruptly up to 0 km/h. With this displacement it is possible to be able to leave the motor in the inferior part of the cockpit. The displacement can be greater relating to the speed that carried the vehicle at the moment of the impact and relating to the inclination that have given to the bars.

The invention is comprised of some assemblies of two metallic and resistant, parallel and inclined pieces as it is shown in figure 3. Piece 1 must be properly hold to the frontal part of the vehicle. Piece 2 must be set to the cockpit of the conductor. In case of head-on collision the piece located in the most frontal part (1) would remain fixed, moving piece 2 on piece 1, along with the cockpit of the driver. Depending on the inclination angles (□ and β) of the bars a greater or smaller displacement of the vehicle will be obtained. In case the angle β is bigger than the angle □ it will be able that the vehicle, in case of a very abrupt impact, tends to incline towards the right as it shows arrow 4, in this way in case of a very abrupt collision between two vehicles the cockpit of the driver would not be sent to the one of the other vehicle, and in case that both vehicles had he same security system the cockpits when inclining would not be hit either both vehicles. The form of the pieces is optimal so that only there is displacement of the pieces in case of head-on collision.

## Claims

**1.**
Security system against head-on collision elevating the vehicle, based on sets of 2 resistant pieces with inclination. Each one of the sets has two pieces, united properly to the frontal part of the vehicle and other properly together with the cockpit of the driver, these pieces are in a position inclined with respect to the ground and parallel bars to the lateral part of the vehicle, as they are shown in figure 3. In case of head-on collision there will be a displacement between both bars of each set, moving therefore the cockpit over the frontal part of the vehicle. The displacement of the vehicle will depend on the inclination of these bars and the speed of the vehicle at the moment of the impact

**2.**
Security system against head-on collision elevating the vehicle, based on sets of 2 resistant pieces with inclination. The shape of the pieces as one is in figure 2 to avoid any other displacement of the bars in case that the collision is not frontal.

## Amended claims

### Amended claims in accordance with Rule 137(2) EPC.

**1.**
Security system against head-on collision elevating the vehicle, based on 2 sets of 2 resistant pieces with installation inclined. Each one of the sets has two pieces, united properly to the frontal part of the vehicle and other properly together with the cockpit of the driver, these pieces are in a position inclined with respect to the ground and parallel to the lateral part of the vehicle. In case of head-on collision there will be a displacement between both pieces of each set, moving therefore the cockpit over the frontal part of the vehicle. The displacement of the vehicle will depend on the inclination of these sets and the speed of the vehicle at the moment of the impact

**2.**
Security system against head-on collision elevating the vehicle, based on sets of 2 resistant pieces with installation inclined. The pieces are U-shaped, one is assembled within the other.
